# EUROPEAN PATENT APPLICATION

(11) **EP 0 655 878 A2**
(43) Date of publication of application: **31.05.1995**
(21) Application number: 94308744.5
(22) Date of filing: 25.11.1994
(51) Int. Cl.: H05B 33/08

(54) **Electronic device with a light**

(30) Priority: 29.11.1993 JP 298544/93
(71) Applicant: SEIKO INSTRUMENTS INC., Chiba-shi, Chiba 261 (JP)
(72) Inventor: Takahashi, Tomohiro, c/o Seiko Instruments Inc., Chiba-shi, Chiba (JP)
(74) Representative: Sturt, Clifford Mark

(57) **Abstract**

An electronic device with light having an electroluminescent element, in which a display is easy to see and a circuit is reduced in size.

A buzzer driving circuit (107) charges and discharges a levelled-up voltage that is obtained from a level-up element (102) to a piezoelectric element (106), in accordance with a control signal output from a buzzer signal generating circuit (111). A control signal inhibiting circuit (105) recognises a signal that is output from the buzzer signal generating circuit (111), and outputs control signals to an inhibit level-up signal generating circuit (104) and a discharge signal generating circuit (110) from outputting a signal. A control signal inhibiting circuit (105) recognises a driving pulse for driving an electroluminescent element to light a display and a piezoelectric element to sound a buzzer, thereby enabling lighting and sounding with one level-up element.

## Description

The present invention relates to an electronic device with a light. In particular it relates to such a device, having an electroluminescent element (hereinafter referred to as "EL") as the lighting device, which uses a low voltage current source as a power source.

Conventionally electronic devices with a light, such as electronic watches, incorporate small heating bulbs as a device for lighting a display, or use a light emitting diode (LED) for the lighting device.

Some electronic devices with a light incorporating an LCD panel are equipped with back-light from an EL. In the field of electronic watches, an EL is used as a device for lighting a display element.

However, in a device for lighting a display used in a conventional electronic device with a light, since a light source is linear, it is difficult to read a whole display when it comes to a rather broad display.

Further, though luminous paint is applied to the display instead of light, the display cannot be clearly recognised because of the small size of the light source.

It is an object of the present invention to provide an electronic device with a light which has a display which can be seen easily. It is another object of the present invention to provide an electronic device which can drive a buzzer with a low voltage current source and one level-up element.

According to one aspect of the present invention there is provided an electronic device comprising an electroluminescent element, electroluminescent element driving means for making the electroluminescent element luminescent, and control signal inhibiting means for controlling operation of the electroluminescent element driving means, wherein the electroluminescent driving means comprises discharging means for discharging electric charges charged in the electro-luminescent element and means for generating a control signal having a differential waveform to control the discharging means.

According to another aspect of the present invention there is provided a method of operation of an electronic device with light incorporating an electro-luminescent element as a light source, said method comprising applying a current, applying an oscillating signal, and confirming a control signal.

If the control signal is indicative that the light is to be on the method further comprises generating a level-up signal to enable generation of a levelled-up voltage, generating a discharge signal in the form of a differential waveform, discharging electric charges from the light element in accordance with the discharge signal and confirming the control signal.

If the control signal is indicative that the light is not to be on, the method further comprises inhibiting generation of level-up and discharge signals and confirming the control signal.

According to a further aspect of the present invention there is provided an electronic device with light incorporating an electroluminescent element as a light source comprising a current source for applying a low voltage, a level-up element for levelling up a voltage of the current source, level-up means for generating a levelled-up voltage from the level-up element, level-up signal generating means for controlling level-up means, rectifying means for rectifying the levelled-up voltage obtained by level-up means, an electroluminescent element, being luminescent by charging and discharging the levelled-up voltage rectified by rectifying means, discharging means for discharging electric charges charged in the electro-luminescent element, discharge signal generating means for controlling discharging means, a differentiating circuit for forming a control signal output from discharge signal generating means into a differential waveform, a piezoelectric element for generating a buzzer sound, buzzer signal generating means for generating a control signal for driving the piezoelectric element, buzzer driving means for charging and discharging the levelled-up voltage obtained from the level-up element to the piezoelectric element, in accordance with the control signal output from buzzer signal generating means, and control signal inhibiting means for recognizing a signal output from buzzer signal generating means, and outputting, into the level-up signal generating means and discharge signal generating means, a control signal to inhibit said generating means from outputting a signal.

According to a still further aspect of the present invention there is provided an electronic device with light incorporating an electroluminescent element as a light source comprising electroluminescent element driving means for making an electroluminescent element luminescent, buzzer driving means for generating a buzzer sound, a buzzer for letting out a sound in accordance with a signal output from buzzer driving means, and control signal inhibiting means for controlling an operation of electroluminescent element driving means in accordance with a signal output from buzzer driving means.

In one embodiment of the present invention there is provided an electronic device comprising a piezoelectric element; buzzer signal generating means; buzzer driving means for charging and discharging a levelled-up voltage obtained from a level-up element, to the piezoelectric element, in accordance with a control signal output from a buzzer signal generating means; and control signal inhibiting means for recognizing a signal output from buzzer signal generating means, and then output control signals to inhibit level-up signal generating means and discharge signal generating means from outputting a signal respectively; thereby enabling an EL to be luminescent and a buzzer to drive with one level-up element.

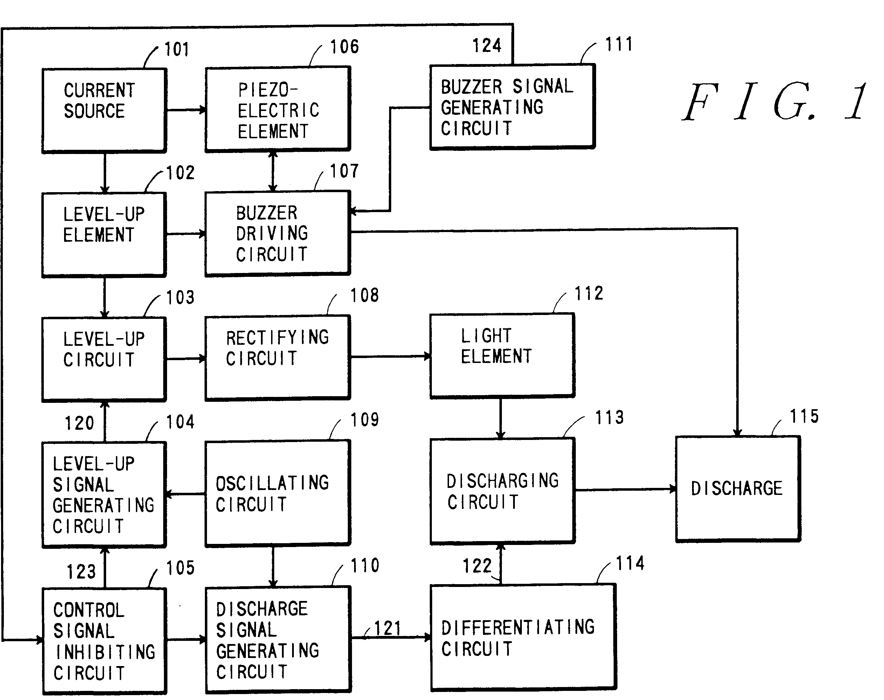

Such an inventive electronic device with light is illustrated in the form of a block diagram in Figure 1 of the accompanying drawings.

A buzzer driving circuit 107 charges and discharges a levelled-up voltage which is obtained from a level-up element 102, to a piezoelectric element 106 in accordance with a control signal that is output from a buzzer signal generating circuit 111.

Control signal inhibiting means 105 recognizes a signal that is output from the buzzer signal generating circuit 111, and then outputs control signals to an inhibit level-up signal generating means 104 and a discharge signal generating circuit 110 from outputting a signal respectively, to the inhibit level-up signal generating circuit 104 and the discharge signal generating circuit 110.

Further, a control signal inhibiting circuit 105 recongnizes a driving pulse for driving an EL element and the piezoelectric element, thereby enabling the EL element to be luminescent and a buzzer to sound with the one incorporated level-up element.

Embodiments of the present invention will now be described with reference to the accompanying drawings, of which:
Fig. 1 is a block diagram showing an electronic device with a light according to a first embodiment of the present invention;
Fig. 2 is a timing chart of control signals showing operation of an electronic device with a light according to the first embodiment of the present invention;
Fig. 3 is a flow chart showing the operation of an electronic device with a light according the first embodiment of the present invention;
Fig. 4 is a block diagram showing an electronic device with a light according to a second embodiment of the present invention; and
Fig. 5 is a timing chart of control signals showing operation of an electronic device with a light according to the second embodiment of the present invention.

Hereinafter, embodiments of the present invention will be explained in accordance with drawings.

### (1) First Embodiment

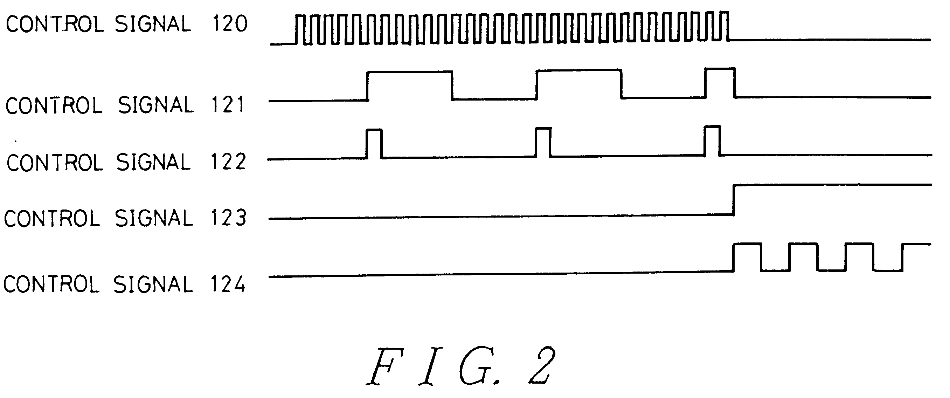

In Fig. 1 and Fig. 2, when a current source 101 is turned on, an oscillating circuit 109 begins to operate. Signals that are output from the oscillating circuit 109 are input into a level-up signal generating circuit 104 and a discharge signal generating circuit 110. A level-up circuit 103 begins to operate in accordance with a control signal 120 output from the level-up signal generating circuit 104.

Operation of the level-up circuit 103 makes a level-up element 102 generate a levelled-up voltage. The levelled-up voltage generated by the level-up element 102 and the level-up circuit 103 passes through a rectifying circuit 108 and is charged into a light element 112, and then the light element 112 is luminescent.

Before the light element 112 is charged with electric charges and becomes overcharged, the discharge signal generating circuit 110 outputs a control signal 121. The control signal 121 is input into a differentiating circuit 114, then is output as a control signal 122, and then is input into a discharging circuit 113. The discharging circuit 113 having the control signal 122 input discharges the electric charges that are charged in the light element 112, in accordance with the control signal 122.

The present invention repeats the above operation, thereby operating as a lighting device.

When a control signal 124 is output from a buzzer control signal generating circuit 111, the control signal 124 is input into a buzzer driving circuit 107. The levelled-up voltage obtained from the level-up element 102 is charged and discharged by the buzzer driving circuit 107 in accordance with the control signal 124 to a piezoelectric element 106, so that a buzzer sound is generated from the piezoelectric element 106.

At that time the control signal 124 that is output from the buzzer control signal generating circuit 111 is also input into a control signal inhibiting circuit 105. While the control signal 124 is input into the control signal inhibiting circuit 105, the control signal inhibiting circuit 105 outputs a control signal 123 so as to inhibit the level-up signal generating circuit 104 and the discharge signal generating circuit 110 from respectively generating the control signals 120 and 121.

By operating the above control, light of the light element 112 and sound of the piezoelectric element 106 do not occur simultaneously.

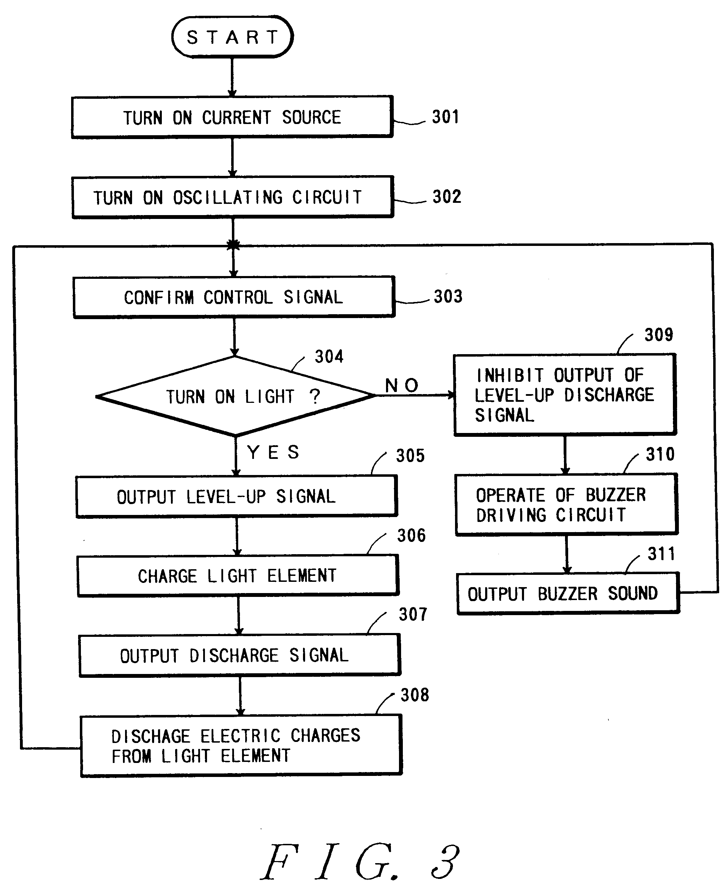

Fig. 3 shows the operation of the embodiment shown in Figure 1.

In Fig. 3, a current source is turned on (Step 301).

The oscillating circuit 109 is turned on (Step 302).

The control signal inhibiting circuit 105 confirms the control signal (Step 303).

Adjustment as to whether light is turned on or a buzzer is rung (Step 304).

When the light is turned on, the level-up signal generating circuit 104 outputs the level-up signal (Step 305).

The light element 112 is charged (Step 306).

The discharge signal generating circuit 110 outputs a discharge signal (Step 307).

Electric charges are discharged from the light element 112 (Step 308), and then the operation returns to Step 303.

When the light is not turned on, the control signal inhibiting circuit 105 inhibits output of a level-up discharge signal (Step 309).

The buzzer driving circuit 107 charges and discharges the piezoelectric element 106 (Step 310).

The buzzer sound is output (Step 311), and the operation returns to the Step 303.

### (2) Second Embodiment

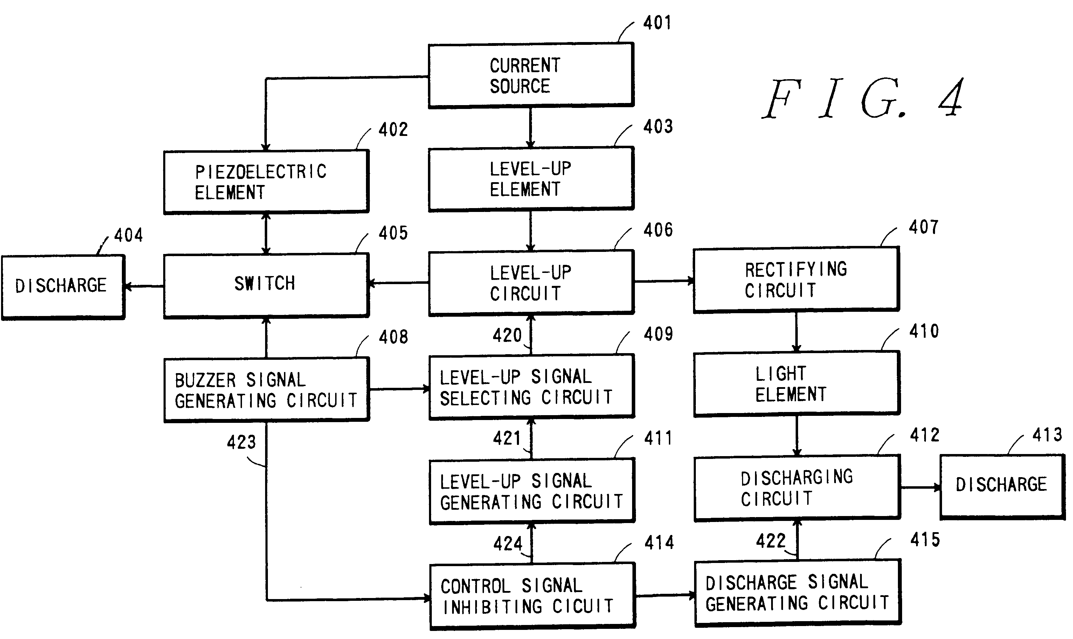

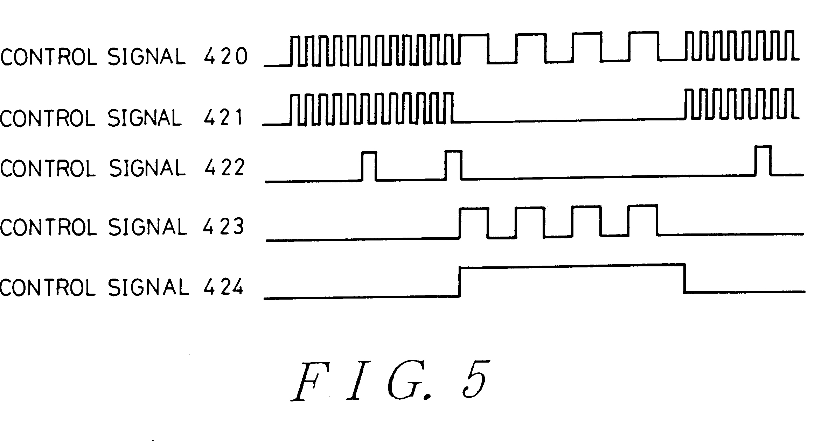

In Fig. 4 and Fig. 5, when a current source 401 is turned on, a control signal 421 is output from a level-up signal generating circuit 411 into a level-up signal selecting circuit 409. This circuit forwards a control signal 420, which in this instance is the same as control signal 421, to a drive level-up circuit 406, thereby enabling a level-up element 403 generate a levelled-up voltage.

The levelled-up voltage obtained from the level-up circuit 406 passes through a rectifying circuit 407 and is charged into a light element 410. A discharge signal generating circuit 415 outputs a control signal 422 before the light element 410 is overcharged. The control signal 422 is input into a discharging circuit 412, to discharge electric charges that are charged in the light element 410.

Repetition of these operations causes the light element 410 to light.

When a control signal 423 is output from a buzzer signal generating circuit 408, a switch 405 is turned on.

Control signal 423 is also input into control signal inhibiting means 414, to cause a control signal 424 to be output therefrom, and thus inhibit a level-up signal generating circuit 411 and a discharge signal generating circuit 415.

The control signal 423 output from the buzzer signal generating circuit 408 is input into level-up signal selecting circuit 409 to make the level-up circuit 406 operate the control signal 420. The levelled-up voltage obtained from the level-up circuit 406 in accordance with the control signal 420 is charged and discharged into a piezoelectric element 402 through the switch 405, thereby causing a buzzer sound.

As long as the control signal 423 is output from the buzzer signal generating circuit 408, a buzzer continues to sound, and the light element 410 is not charged.

As explained above, the present invention provides an electronic device with a light which uses an electroluminescent element as a light source. In the inventive device, a lighting function and an alarming function are realized with a single level-up element. Moreover, use of a differentiating circuit to supply a control signal to determine a timing of discharge has the effect that a display is easy to see and that the circuitry is reduced in size.

## Claims

1. An electronic device comprising:
an electroluminescent element (112;410);
electroluminescent element driving means (101-104, 108-110, 113-115; 401,403,406,407,409,411-413,415) for making the electroluminescent element (112;410) luminescent; and
control signal inhibiting means (105;414) for controlling operation of the electroluminescent element driving means (101-104,108-110, 113-115; 401,403,406,407,409,411-413,415);
wherein the electroluminescent driving means (101-104, 108-110, 113-115; 401,403,406,407,409,411-413,415) comprises:
discharging means (113,115;412,413) for discharging electric charges charged in the electroluminescent element (112;410); and
means (110,114;415) for generating a control signal (122;422) having a differential waveform to control the discharging means (113,115;412,413).

2. A device as claimed in claim 1, further comprising:
a buzzer (106;402); and
a buzzer driving means (101,102,107,111;401,403,405,406,408,409) for making the buzzer (106;402) generate a sound,
wherein the buzzer driving means (101,102,107,111; 401,403,405,406,408,409) comprises a buzzer signal generating means (111;408) for generating a control signal for driving the buzzer (106;402) and a control signal (124;423) for operating the control signal inhibiting means (105;414).

3. A device as claimed in claim 2, wherein the electroluminescent driving means (101-104, 108-110, 113-115; 401,403,406,407,409,411-413,415) and the buzzer driving means (101,102,107,111; 401,403,405,406,408,409) comprise, in common:
a current source (101;401) for applying a low voltage; and
a level-up element (102;403) for levelling up a voltage of the current source (101;401).

4. A device as claimed in claim 3, wherein the electroluminescent driving means (101-104, 108-110, 113-115; 401,403,406,407,409,411-413,415) further comprises:
level-up means (103;406) for generating a levelled-up voltage from the level-up element;
level-up signal generating means (104;411) for controlling the level-up means; and
rectifying means (108;407) for rectifying the levelled-up voltage obtained by level-up means; and
wherein the control signal inhibiting means (105;414) controls operation of the level-up signal generating means (104;411).

5. A device as claimed in any preceding claim, wherein the means (110,114) for generating a control signal (122) having a differential waveform comprises:
a discharge signal generating circuit (110) for generating a control signal (121) in response to the output of the control signal inhibiting means (105); and
a differentiating circuit for converting the control signal (121) from the discharge signal generating circuit (110) into a differential waveform (122).

6. A method of operation of an electronic device with light incorporating an electroluminescent element as a light source, said method comprising:
applying a current (301);
applying an oscillating signal (302);
confirming a control signal (303);
if the control signal is indicative that the light is to be on (304):
generating a level-up signal to enable generation of a levelled-up voltage (305);
generating a discharge signal in the form of a differential waveform (307);
discharging electric charges from the light element in accordance with the discharge signal (308); and
confirming the control signal (303);
and if the control signal is indicative that the light is not to be on (304):
inhibiting generation of level-up and discharge signals (309); and
confirming the control signal (303).

7. A method as claimed in claim 6, further comprising, if the control signal is indicative that the light is not to be on:
generating a buzzer signal (310); and
generating sound in accordance with the buzzer signal (311).

8. An electronic device with light incorporating an electroluminescent element as a light source comprising:
a current source (101;401) for applying a low voltage;
a level-up element (102;403) for levelling up a voltage of the current source (101;401);
level-up means (103;406) for generating a levelled-up voltage from the level-up element;
level-up signal generating means (104;411) for controlling level-up means;
rectifying means (108;407) for rectifying the levelled-up voltage obtained by level-up means;
an electroluminescent element (112;410), being luminescent by charging and discharging the levelled-up voltage rectified by rectifying means (108;407);
discharging means (113;413) for discharging electric charges charged in the electroluminescent element (112;410);
discharge signal generating means (110;415) for controlling discharging means;
a differentiating circuit (114) for forming a control signal (121) output from discharge signal generating means (110;415) into a differential waveform (122,422);
a piezoelectric element (106;402) for generating a buzzer sound;
buzzer signal generating means (111 ;408) for generating a control signal for driving the piezoelectric element (106;402);
buzzer driving means (107;405) for charging and discharging the levelled-up voltage obtained from the level-up element to the piezoelectric element, in accordance with the control signal output from buzzer signal generating means (111;408); and
control signal inhibiting means (105;414) for recognizing a signal output from buzzer signal generating means (111;408), and output, into the level-up signal generating means (104;411) and discharge signal generating means (110;415), a control signal to inhibit said generating means (104,110;411,422) from outputting a signal (120,121;421,422).

9. An electronic device as claimed in claim 8, wherein a waveform of a discharge signal (122) is formed by the differentiating circuit (114).

10. An electronic device as claimed in claim 8, wherein the device has control signal inhibiting means (105;414) for inhibiting an output from level-up signal generating means (104,411) and discharge signal generating means (110;415) in accordance with an output from buzzer signal generating means (111,408).

11. An electronic device as claimed in claim 8, wherein outputs from level-up signal generating means (104;411) and discharge signal generating means (110;415) are prohibited by an output from buzzer signal generating means (111,408) a signal from buzzer signal generating means (111,408) is input into level-up means (103;406), and the piezoelectric element (106;402) is charged and discharged to output a buzzer sound.

12. An electronic device with light incorporating an electroluminescent element as a light source comprising:
electroluminescent element driving means for making an electroluminescent element (112;410) luminescent;
buzzer driving means (107,111;408,405) for generating a buzzer sound;
a buzzer (106;402) for letting out a sound in accordance with a signal (124;423) output from buzzer driving means (107,111;408,405); and
control signal inhibiting means (105;414) for controlling an operation of electroluminescent element driving means in accordance with a signal (124;423) output from buzzer driving means (107,111;408,405).
